# EUROPEAN PATENT SPECIFICATION

(11) **EP 1 285 516 B1**
(45) Date of publication and mention of the grant of the patent: **18.10.2006**
(21) Application number: 01932015.9
(22) Date of filing: 25.05.2001
(51) Int. Cl.: H04L 29/06

(54) **CHAT SYSTEM FOR MOBILE TERMINALS AT A SPECIFIC LOCATION**
Untehaltungssystem für Mobiltelefone an einem vorherbestimmten Aufenhaltsort

SYSTEME DE CHAT POUR MOBILES SITUES DANS UNE ZONE PRECISE

(30) Priority: 30.05.2000 US 580442
(43) Date of publication of application: 26.02.2003
(73) Proprietor: Nokia Corporation, 02150 Espoo (FI)
(72) Inventor: KOPRA, Toni, FIN-03250 Ojakkala (FI)
(74) Representative: Becker Kurig Straus
(86) International application number: PCT/IB2001/000938
(87) International publication number: WO 2001/093529

(56) References cited:
- WO-A-00/22860
- WO-A-01/15450
- WO-A-96/00950
- US-A- 5 573 244
- US-A- 5 828 839
- US-A- 5 848 396
- US-A- 5 949 326

## Description

### BACKGROUND ART

The present invention relates to the field of telecommunications. More particularly, the present invention relates to the use of mobile terminals capable of being connected to a chat system at a specific location, e.g., a sports stadium.

### TECHNICAL FIELD

The Internet has opened up an entirely new area of communication between people. That is, news groups and chat rooms have become very popular on the Internet since they allow people of similar interests to communicate with each other quickly and easily with little or no cost.

Group entertainment, that is, assembling a group of people for the purpose of watching either a sporting event or other entertainment has always been popular throughout recorded history as evidenced by the Roman Coliseum and the Mayan ball courts.

Several approaches relating to mobile access to chatting systems and other interactive services such as betting and gaming activities are known in the art.

For example, US 5 949 326 discloses a paging technology to provide a user with wireless access to the internet and services such as a chat system through a pager system.

In US 5 828 839, a computer network chat system with a plurality of chat rooms is described, wherein the topics of the chat rooms are currently broadcasted TV or radio programs. Users may be assigned to chat rooms depending on a indicated TV/radio channel and a time zone.

WO 00/22860 describes a method and system for automatically informing a user of a wireless communication terminal that another user is approaching his location.

WO 96/00950 provides a remote gaming system to allow a user to bet or wager on a remote gaming facility such as a casino, particularly without necessarily establishing on-line connection to the remote gaming facility.

Document WO 01/15450, which was filed by the applicant on the priority date of this application, discloses a user interface for real-time interactive services such as a betting service without a chat system or localized activities.

What the present invention accomplishes is to integrate a chat system, such as an Internet chat system, with users located at a specific location, a combination which has never been previously contemplated.

### DISCLOSURE OF INVENTION

Accordingly, an object of the present invention is to provide a chat system which allows a group of users located at a specific location to enter a chat system using their mobile terminals so as to communicate with other users located at the same location.

### BRIEF DESCRIPTION OF DRAWINGS

The foregoing and a better understanding of the present invention will become apparent from the following detailed description of example embodiments and the claims when read in connection with the accompanying drawings, all forming a part of the disclosure of this invention. While the foregoing and following written and illustrated disclosure focuses on disclosing example embodiments of the invention, it should be clearly understood that the same is by way of illustration and example only and the invention is not limited thereto.

The spirit and scope of the present invention are limited only by the terms of the appended claims.

The following represents brief descriptions of the drawings, wherein:
Fig. 1 illustrates an example of the architecture of an Internet system in which an embodiment of the present invention can be practiced.
Figure 2 depicts a block diagram of digital services being delivered to a viewer.
Figure 3 depicts a block diagram of the viewer= connectivity and interaction with the provided interactive services.
Figure 4 depicts a block diagram of the betting provider architecture.
Figure 5 is a diagram depicting a possible interactive display.
Figure 6 depicts an integrated display with a live video feed and interactive content.
Figure 7 depicts a betting login page which includes Login and Password fields for logging on to the interactive service.
Figure 8 depicts a main betting page supplied by the betting server 120 to the user at logon.
Figure 9 illustrates the system architecture of one example embodiment in accordance with the present invention.
Fig. 10 is flowchart of the operation of one example embodiment in accordance with the present invention.
Fig. 11 illustrates the terminal functionality of one example embodiment in accordance with the present invention
Fig. 12 is flowchart of another example embodiment in accordance with the present invention.
Figure 13 depicts a flowchart of the interactive betting process.
Figure 14 depicts a block diagram of a direct reception scenario.

### BEST MODE(S) FOR CARRYING OUT THE INVENTION

Before beginning a detailed description of the subject invention, mention of the following is in order. When appropriate, like reference numerals and characters may be used to designate identical, corresponding, or
similar components in differing drawing figures. Furthermore, in the detailed description to follow, example sizes/models/values/ranges may be given, although the present invention is not limited thereto. still furthermore, well-known power connections and other
components may not be shown within the drawing figures for simplicity of illustration and discussion and so as
not obscure the invention.

As noted above, the present invention is directed to a chat system which enables a group of users having mobile terminals to communicate with each other when located in the same general area, such as at a sports stadium, for example.

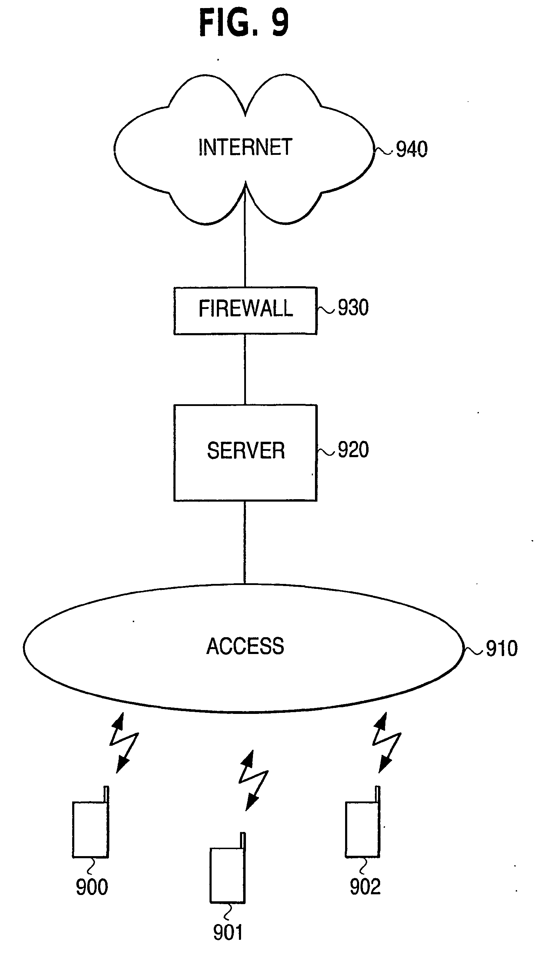

As illustrated in Fig. 9, a plurality of mobile wireless terminals 900, 901 and 902, communicate with an access unit 910 connected to a server 920.

The access unit 910 may be a LAN (local area network) located in the stadium or any other location where a group of users are expected to congregate. The connection from the chat enabling terminal to the server 920 is via the access unit 910 wirelessly connected to the units 900, 901 and 902. For this embodiment, the units 900, 901 and 902 may be connected to the access unit 910 via Bluetooth (a short range wireless transmission system) or a WLAN (wireless local area network) arrangement.

The chatting system allows the chatting to be effected between all of the other terminals disposed within the same location. The chatting can be directed to a specific terminal or terminals at the same location or to all of the terminals at the same location.

The access unit 910 is connected via the server 920 and a firewall 930 to the Internet 940. This allows each terminal unit to connect to the Internet to utilize various other services such as Internet searching or browsing, sending or receiving e-mail, or connecting with other services, such as betting services, in the case of a sporting event, for example.

It is envisioned that the chatting service may not necessarily be available in its complete form to all terminals located within the same location but rather the complete service would be available only to the terminals of those users who have become "club members."

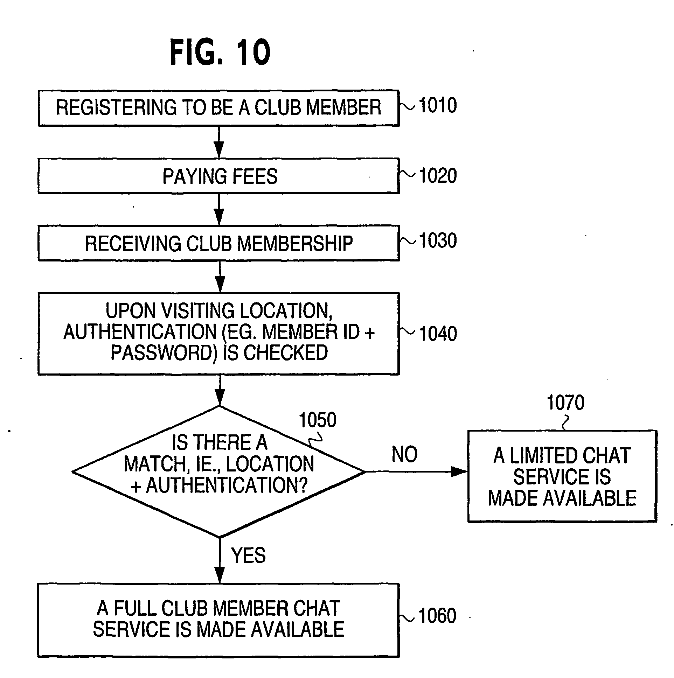

As illustrated in Fig. 10, a user with a terminal wishing to use the full chat service would register to be a club member in step 1010 and would pay the appropriate fees in step 1020. The registration could either be online via a secure server using a credit card or by other means such as by telephone or regular mail.

Upon paying the appropriate fees, the user would receive a club membership in step 1030 which would include a member ID and password, for example. This could also be done via the Internet or by other means.

When that user visits a location having the chat service available, authentication is checked in step 1040 using the members' ID and password, for example.

If it is determined that there is a match at that location in step 1050, then the full spectrum of the chat services are made available to the user in step 1060.

On the other hand, if there is no match determined in step 1050, then it may be possible to allow the user who is not a club member to get a limited chat service which would not include all of the services available to a club member in step 1070.

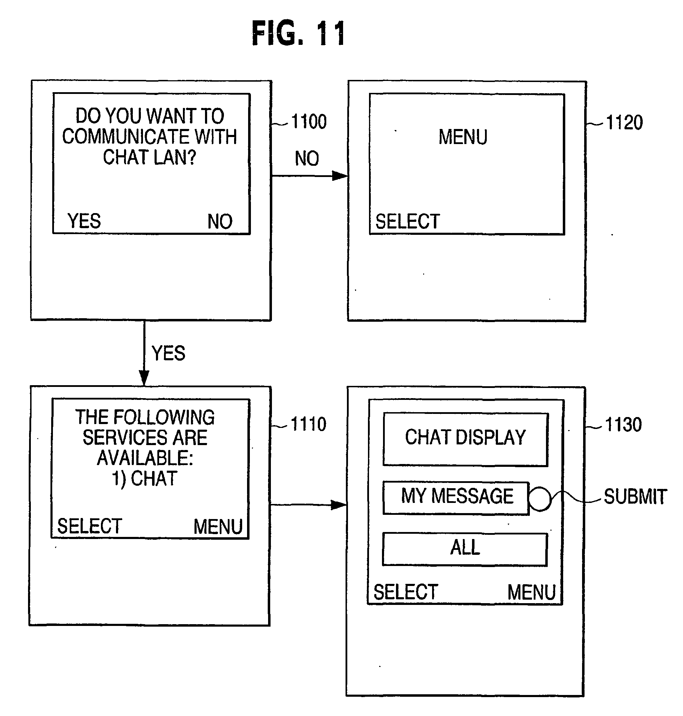

Fig. 11 illustrates the terminal functionality utilized in the chatting system in accordance with an example of the preferred embodiment.

That is, block 100 illustrates what a user would see on the user terminal's display at the location of the chat system.

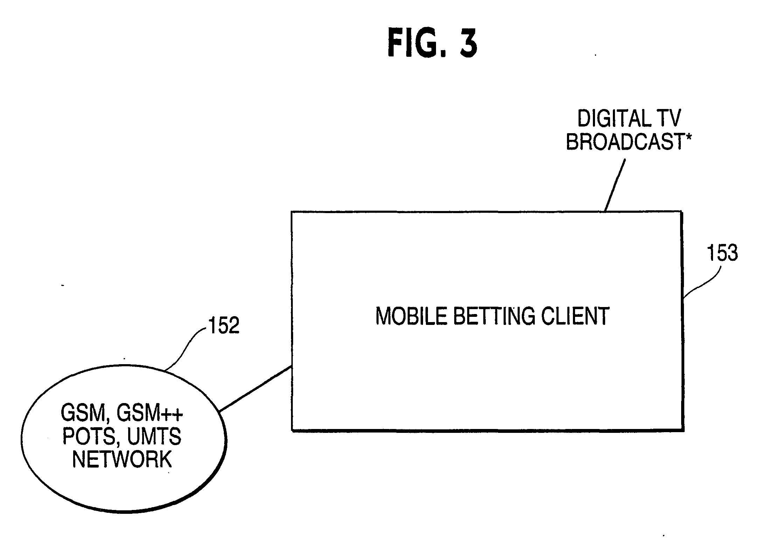

If the user wishes to communicate with the chat LAN, the user answers affirmatively and the user's display would then show a screen similar to that illustrated in block 1110 of Fig. 3, for example.

If the user chose the chat option, the display of the user's terminal would appear as illustrated in block 1130 of Fig. 11, for example.

The user would then see the messages of other users' at the same location and could create and send his or her own message in response to the chat messages on the display.

Furthermore, the terminal of the user would also have the capability of forwarding the user's message to a specific terminal or terminals rather than forwarding a generalized message to all of the terminals at the same location.

If on the other hand, the user did not wish to communicate with the chat LAN, the terminal of the user would display a menu as shown in box 1120 of Fig. 11, for example, allowing the user to select alternate options, such as browsing on the Internet or sending an E-mail to another who is not at the same location as the user.

The above-noted example of an embodiment of the present invention has utilized a wireless LAN. However, a GPRS (general packet radio service)or 3G (third generation wireless technology) terminal may be used alternatively as the chatting terminal. This requires the GPRS or 3G network to determine the required location. This may be determined, for example, from the information that the mobile network already has with regard to the location of the terminal. It will be understood that other possible alternatives may used, like GPS. This can be integrated to the phone.

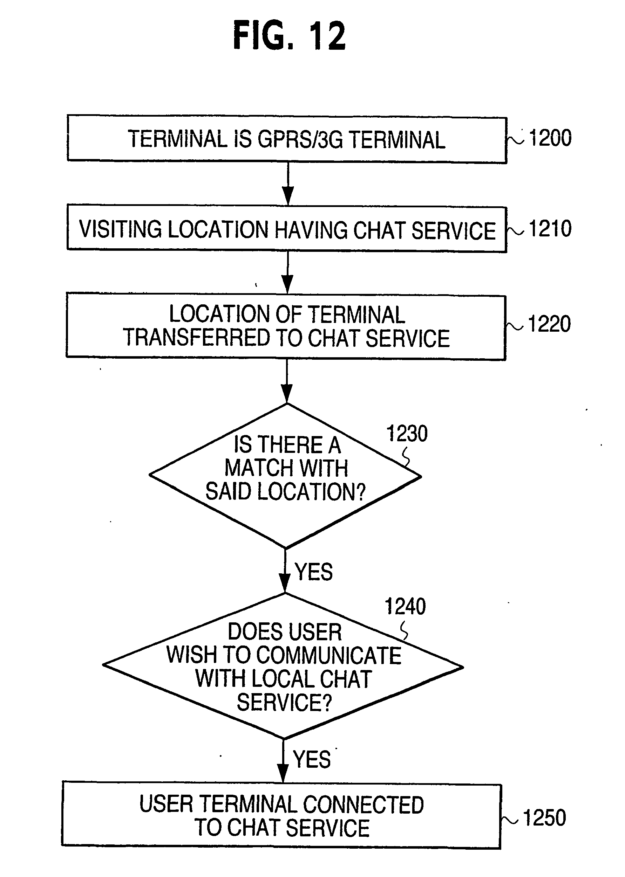

As illustrated in Fig. 12, if the user terminal is a GPRS or 3G terminal as noted in box 1200 and is visiting a location in which there is a chatting service as illustrated in box 1210, the location of the terminal as determined by the mobile network is transferred from the mobile network to the local area network as noted in box 1220 and a determination is made as to whether there is a match between the location of the terminal and the location of the chat service in box 1230.

The location information can be gotten from the base station in 3G when the serving RNC has the signal information.

Upon a determination that the user wishes to communicate with the local chat service as illustrated in box 1240, the user terminal is connected to the chat service as illustrated in box 1250 after the proper authentication as noted above with regard to the wireless LAN embodiment of Fig. 10.

The communication can be implemented either by the GPRS or 3G data from the user terminal being transmitted to the mobile network to the Internet and finally to the chat LAN or by the user terminal directly to the mobile network and then to the LAN or alternatively, the terminal of the user may include both a Bluetooth transceiver or WLAN and a GPRS or 3G capability allowing it to communicate directly with the access unit 110.

The chat system may be part of the service provider's system. The chat is activated when a user enters to a specific location e.g. stadium. The system includes chat information filtering. Every chat message sent by a user will be stored in database with keywords:
- user's favorite team (system, already stored in user table)
- user's age (system, already stored in user table)
- user's sex (system, already stored in user table)
- user's hometown or postal code (system, already stored in user table)
- user's day job (system, already stored in user table)
- user's credits or success in a betting system - there can be different levels of difficulty (system, already stored in bet table)
- user's bets (system, already stored in bet table)
- tone of the message (set by the user, e.g. shouting, whispering, complaining...)

The keywords will be partly set by the user and partly by the system. With these keywords the content provider can create various chat channels or the user himself can select the group he wants to communicate with. Main idea is that the chat messages will be pushed to clients according to these keywords. The messages not matching with keywords are eliminated. This will reduce the volume of broadcasted chat messages and increases the usability of this application.

Other service nodes like interactive provider server or betting provider server 920 can be connected to application server 930.

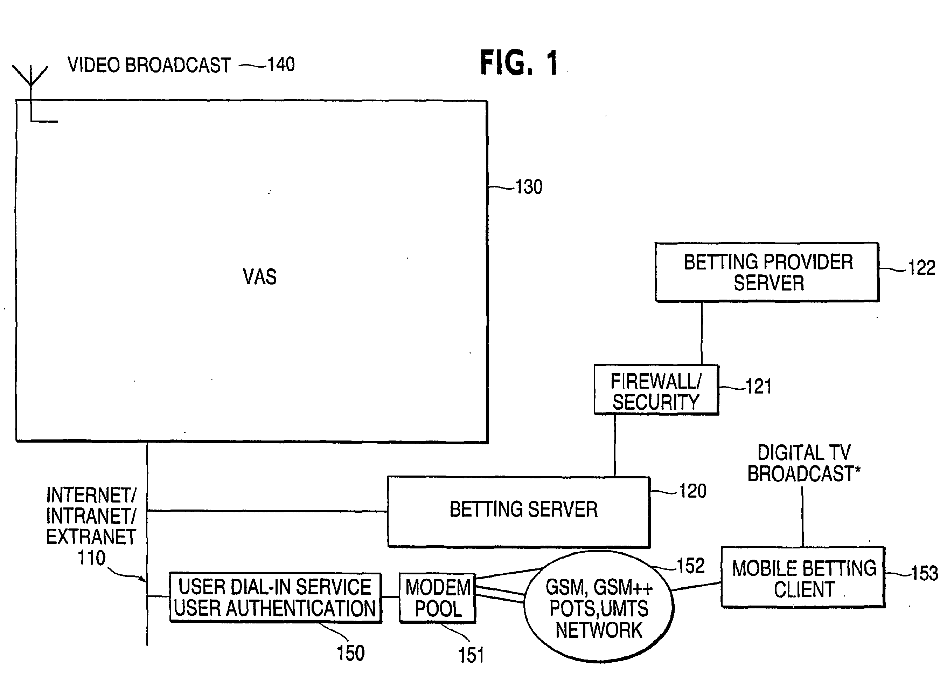

In the various disclosed embodiments, an interactive application, betting, for example, is facilitated. **Figure 1** depicts a block diagram of the creation, reception, and response to interactive services in the presently preferred embodiment. A television signal **140** is received, compressed, and converted for streaming onto the Internet **110.** Betting information is also created and streamed onto the Internet **110.** A mobile betting client **153** can display the television program **120** and the betting information simultaneously and a viewer can interactively select betting via the mobile betting client **153.** Finally, the mobile betting client 153 transmits information to the host facility **122** by connecting to a network **110** linked with the host facility **122,** for example, the Internet.

Alternatively, a host facility **122** can integrate data to be supplied to the viewer into the vertical blanking intervals of the television signal **140** and broadcast (or stream) the integrated signal. A mobile betting client **153** receives the broadcast integrated signal and separates the integrated signal into a television signal and the supplied dynamic or static data.

Digital broadcast technology allows for services that can present many-to-one, many-to-many, and one-to-one communication. DVB has defined delivery media for satellite services (DVB-S, direct-to-home viewing, cable (DVB-C) run in several countries, and terrestrial, or "over the air", (DVB-T) planned for 17 countries. Use of return channels enables digital receivers to provide a variety of services including Internet, television, and web content. Processing of the digital signal can be accomplished on a desktop or laptop computer.

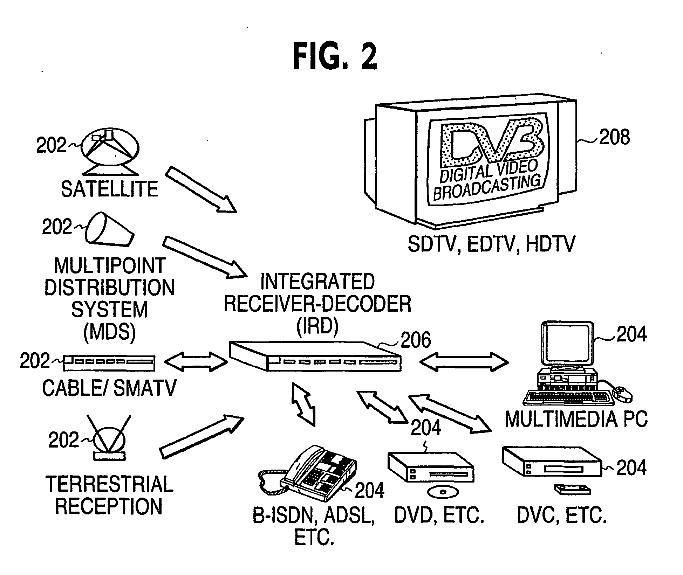

**Figure 2** depicts a block diagram of digital services being delivered to a viewer. The interfaces for the media can include, for example, GSM, GSM+, UMTS, ISDN, PSTN, ATM, and others **202.** The protocol and interface enable a cluster of interconnected devices in the home, each receiving and processing digital broadcast services **204.** A set top box (STB) or integrated receiver-decoder (IRD), such as the d-box™ manufactured by Nokia, Inc., **206** integrates the services for viewing on a television **208.**

The television receiver that incorporates the invention should include a plug-in PIP module. Most receivers that incorporate PIP and other features also include a microprocessor control which, via a suitable control bus, periodically interrogates certain functional blocks and modules in the television receiver chassis to determine whether they are present and, if so, to control their operation. In the case of a PIP module, polling by the microprocessor indicates whether the module is present in the receiver. If it is, the microprocessor arranges to switch the composite video signals (from the tuner and external sources) through the PIP processor and then to the main video processor of the television receiver, in preference to the normal composite video produced. Thus, the video processor of the television receiver has its inputs supplied from either the main chassis in the event there is no PIP module or from the PIP processing module.

A viewer watches a mobile betting client 153, for example, a digital television, which is able to act as an Internet browser. Commercial applications such as Inet solution enable television/browser functionality. A dial-up connection or other communications device, such as a LAN connection, can provide Internet connectivity. Along with web browsing functions, the mobile betting client is equipped with streaming video and audio reception and display and secure connection capabilities.

**Figure 3** depicts a block diagram of the connectivity of the viewer and interaction with the provided interactive services. In the presently preferred embodiment, the mobile betting client 153 receives an integrated digital broadcast signal (DVB-T). Reception of the signal can be accomplished through various means. In the presently preferred embodiment, the mobile betting client receives the signal over a GSM, GSM++, POTS, UMTS, or other type of connection 152. The mobile connection 152 is itself connected to a network such as an extranet, intranet, or the Internet 110. Mobile connection to the network 116 may take place in a conventional manner over a modem pool 151 with user dial-in and authentication services 150.

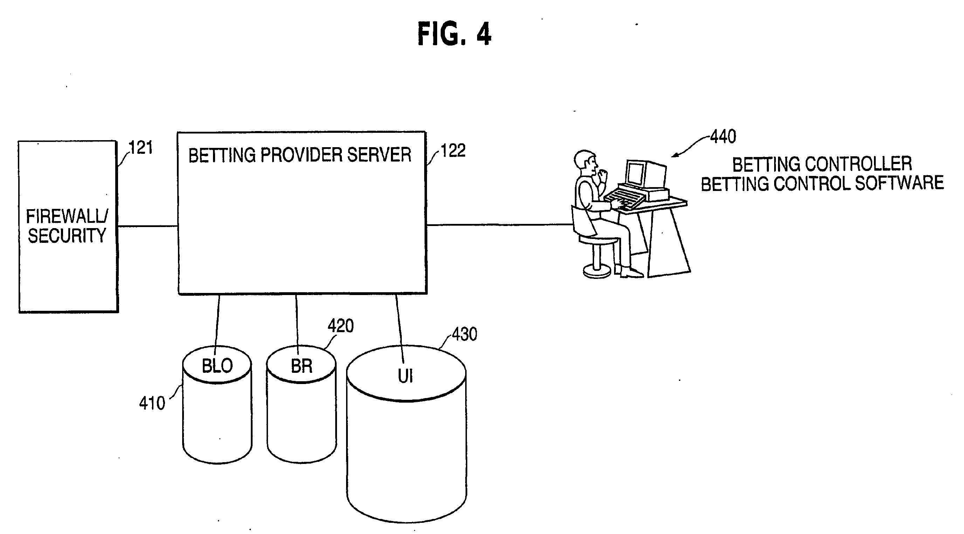

**Figure 4** depicts a block diagram of the betting provider architecture. In the presently preferred embodiment, the betting provider information is protected from network snooping by a security device such as a firewall 121. At least one betting provider server 122 resides behind the firewall. Software running on the server tracks viewers (bettors) in various competitions.

One task of the server 122 is to authenticate viewers. In the presently preferred embodiment, a user information (UI) database 430 is maintained. The UI database 430 stores usernames and associated passwords, user account information, user preferences, and other user specific information. In addition to tracking viewers, the server 122 receives and accepts bets that have been requested by the viewer to a betting server 120 running on the network side of the firewall 121 and connected to a network such as an extranet, intranet, or the Internet 110. This betting server 120 acts as an interface between interactive services viewers on the network and the actual betting provider.

The betting provider server 122 receives betting content (questions to the user) and the odds of the particular bets from a betting controller 440. The betting controller 440 is responsible for creating betting content, controlling the betting event, i.e., opening and closing of betting, etc. Betting control software is used to enter and calculate betting content and odds and send them to the betting provider server 122. In the presently preferred embodiment, the betting provider server 122 stores the betting content and odds in a database (BCO) 410. The betting controller 440, via betting control software tracks, the results of the betting question and reports the results to the betting provider server 122.

The results of the bets are stored in a database (BR) 420. Once the results of a particular question are known and stored by the betting provider server 122, software on the server calculates payments to the bettors on the particular question. In the presently preferred embodiment, electronic accounts stored in the UI database 430 are used for tracking betting wins and losses. The results of the event and sub-events (betting questions) are reported to the betting server 120. The mobile betting client 153 can then receive the results from the betting server 120.

The connection between bets and chat line system is that the user can chat with other specific users betting the same bets. As well, there is additional quick bets for those who are at the stadium. The mobile betting client can join to the chatting services e.g. suggested by the betting service. The clients coming to join to the chat might have a common betting profile. The beting information is collected to the bett8ing server's database. The chat service may include e.g. the chat rooms for the bettors betting in certain games. The software enabling chatting service may be incorporated in the betting server. The client can see the chat rooms he/she is able to join in his/her betting client. After connected to the chat the client can see chatting and to join the chatting accordingly. The chatters can be selected also based on how they have had success in betting etc.

Video and audio streaming of an on-going competition on which viewers may bet is accomplished, in the presently preferred embodiment, through use of a live video/audio streaming server (VAS) 130. The VAS is connected to a network such as an extranet, intranet, or the Internet 110. A live broadcast 140 of a competition is received through an RF receiver at the server. The audio and video components of the signal are separated and digitized. The digitized audio is then compressed using one of several digital compression schemes, for example, H.728, H.729, or GSM. Likewise the digitized video is compressed using a scheme such as MPEG, MVC, H.261, etc. The digitally compressed audio and video are packaged for network transfer *e.g*., TCP/IP, UDP. The packets are then broadcast to the network 110 controlled by a streaming/multicasting controller.

The mobile betting client 153 has PIP functionality. This functionality allows the viewer to simultaneously view two audio/video broadcasts in the display of the mobile betting client. The two broadcasts can be, for example, the live-feed of a competition in one picture and interactive betting possibilities in another.

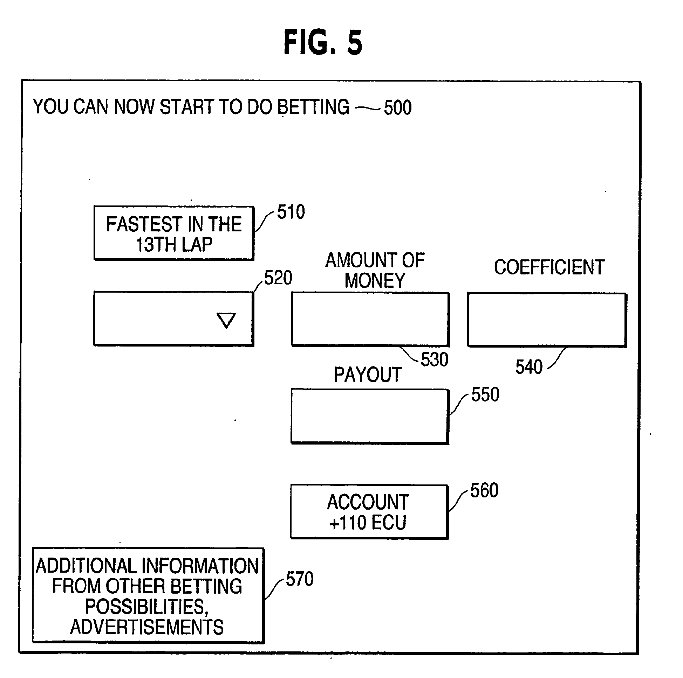

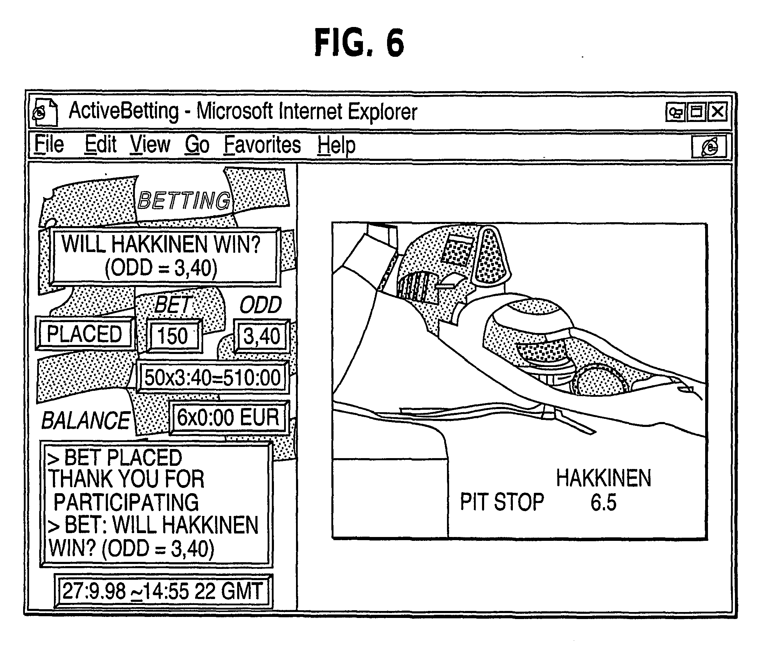

**Figure 5** is a diagram depicting a possible interactive display. Directions at the top of the display 500 inform the viewer of the status or title of the interactive activity, in this case, betting. For an application such as betting, a dialog-type box 510 is used to inform the viewer of the current question on which bets can be placed. In the context of an auto race, a question such as "Who will turn the fastest 13th lap" may be presented. A pull-down menu or radio button dialog box 520 may be presented depending on the type of question. In the above example, all of the drivers remaining in the race may be presented in a pull-down menu. Dialog boxes specific to wagering: stakes 530; odds 540; and payout 550, may also be presented. A statement of account 560 with a betting services provider may also be presented. The account is dynamic throughout the competition, registering winnings and debits as each occurs. A response dialog 570 informing the user of bets being received and the current allowable wagers may also be provided. Such a response window is also dynamically updated as available bets are made or changed. In addition to the displays listed above, dialog boxes presenting last minute betting advice or information can also be displayed. Such advice can include, for example, up to the minute status of race participants not currently being shown on the broadcast or the injury status of key players at an event. **Figure 6** depicts an integrated display with a live video feed and interactive content.

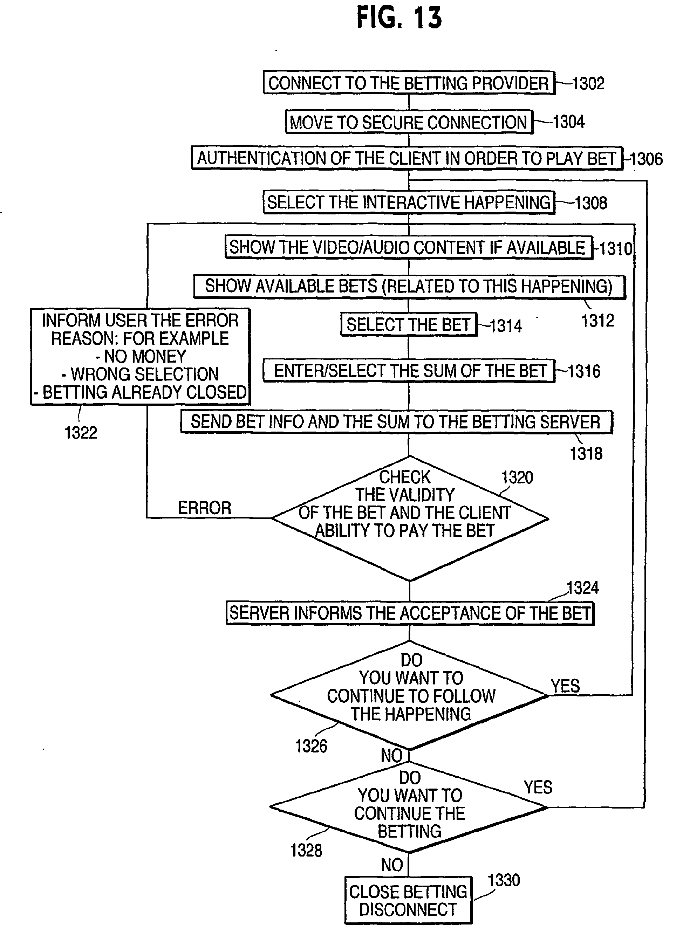

**Figure 13** depicts a flowchart of the interactive betting process. First, a mobile betting client wishing to interactively bet connects to the betting provider **(Step 1302).** Once connected, a secure network connection, using, for example, encryption or secure sockets, is established **(Step 1304).** Once a secure connection is established, an authentication process occurs, comparing user name and password entered by the client to entries in a database of user information **(Step 1306).** Once authenticated, the client can select the type of competition to bet on, for example, auto racing, hockey, or football. **(Step 1308).** If live video and audio is available, the competition is displayed **(Step 1310).** The interactive betting opportunities currently available for the chosen competition are then displayed to the client **(Step 1312).** The betting opportunities are dynamic and will be continuously updated. The client informs the betting provider of its desire to bet **(Step 1314)** and the stakes **(Step 1316).** The stakes can be variable amounts or limited to selections presented in a choice menu. The betting selection and the stakes are sent to the betting provider across the secure connection **(Step 1318).** The betting provider verifies the entries made by the client (Step 1320). Further checks, including client payment history and credit reports can be included in this verification step (Step 1320). If any of the entries is invalid, a valid entry is requested **(Step 1322).** Entries can be invalid for several reasons, for example, incorrect selection, closing of the requested betting selection prior to the bet being received, or the client's inability to cover the stakes.

If the entries are valid, the betting provider informs the client of that the particular wager has been accepted **(Step 1324).** Different bets open and close during the course of the competition. Once the bet has been made and accepted, the client may continue to view the competition, personally monitoring the outcome of its wager and making other bets on the same competition **(Step 1326).** The client may also choose a different competition to view and possibly bet on **(Step 1328).** If the client does not wish to view or bet on any other competitions, the connection between the client and the betting provider is closed **(Step 1330).**

At some point after the close of a particular wager, the participants are informed of the result and appropriate adjustments to betting accounts are made. If the client is still connected to the betting provider when the results are known, the client can be informed of the results. Otherwise, the client can be informed of the status of any outstanding wagers the next time a connection to the betting provider is established.

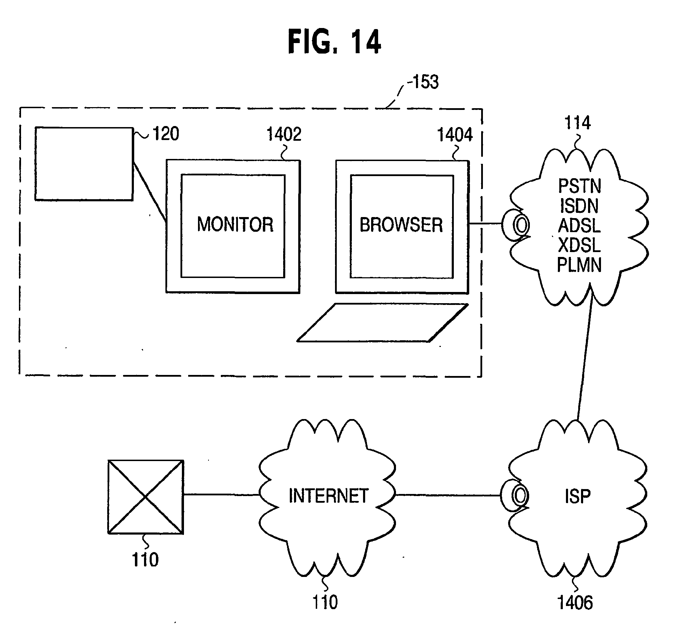

In an alternative embodiment, a live broadcast 140 of a competition can be received directly by the mobile betting client 153. **Figure 14** depicts a block diagram of a direct reception scenario. The mobile betting client 153 can, of course, be at the viewer's home or at another viewing location. The broadcast 140 is displayed in a monitor **1402.** Additionally, an Internet browser can be connected to the monitor 1402 or, alternatively, to a separate display 804 in order to interface with the betting server 120 through a switching network 114 and an Internet service provider (ISP) **1406.** The PIP property of the monitor can be used if the browser and the broadcast 140 are shown in the same monitor.

In another alternative embodiment, a DVB signal with the live broadcast 140 and betting information from the betting server 120 can be integrated into a digital broadcast.

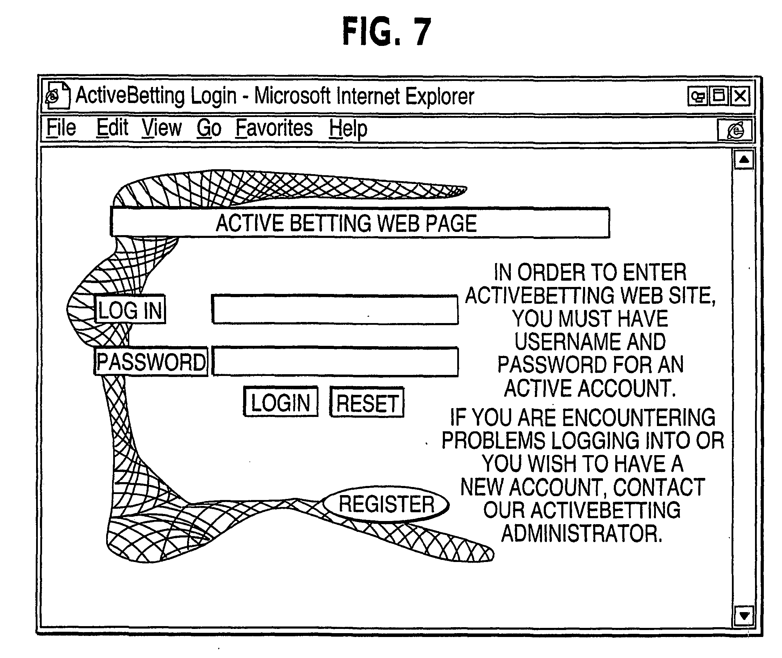

**Figure 7** depicts a betting login page which includes Login and Password fields for logging on to the interactive service. The connection can be established over the Internet using a Virtual Private Network (VPN) tunnel and Secure Sockets Layer (SSL) connection. Once a secure connection is established, an authentication process occurs in which the users enters his user name and password in separate fields. If the incorrect user name and password are entered, the login screen is again displayed. No assumption is made that the mobile betting client has a keyboard or a mouse. However, the user can edit text with a delete key and navigate with arrow keys or other cursor control in both the horizontal and vertical planes. In order to participate in the service, the user will need to register with the betting provider server 122. New users will need to register. Registration information includes information about the device the user is connecting with, the bandwidth of the connection, and the style sheet (or skin) the user prefers. New user generally are kept from participating in the service until an active betting supervisor or administrator enables the user logon.

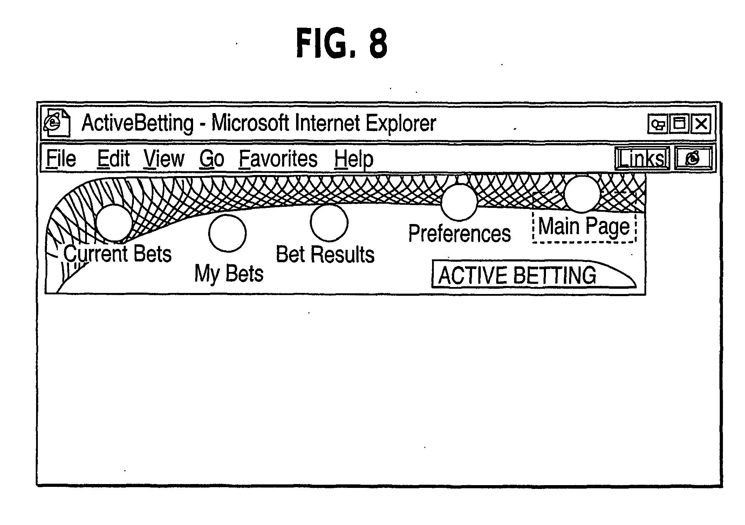

Logging on allows users of the service to make bets and watch both live and on-demand streaming broadcasts. **Figure 8** depicts a main betting page supplied by the betting server 120 to the user at logon. Information such as the current time, last use, and account balance information is displayed. Information such as the number of other users currently participating can also be displayed. Users can navigate from the main betting page to other pages by navigating with the arrow or cursor control keys.

After the log-in process, the only chance to navigate is downward to reach "lower" folderleaves. Thereafter, the user can navigate up or down in the levels to choose the service. In a preferred embodiment of the invention, there are four main services which can be on different pages or vertically positioned in the display screen. The main page is for betting actions and watching video transmissions. There may also be a news service providing various short messages concerning the games. A settings page allows a user to change their personal settings. This concludes the description of the example embodiments. Although the present invention has been described with reference to a number of illustrative embodiments, it should be understood that numerous other modifications and embodiments are possible in the component parts and/or arrangements of the subject combination arrangement within the scope of the foregoing disclosure, the drawings, and the appended claims. In addition to variations and modifications in the component parts and/or arrangements, alternative uses will also be apparent to those skilled in the art.

## Claims

1. A chat system for wirelessly communicating in a chat room at a specific location comprising :
a plurality of wireless terminals (900, 901, 902), wherein each of the plurality of wireless terminals (900, 901, 902) is configured for communicating over a wireless network, wherein a physical location of each of the plurality of wireless terminals is determinable at least in part by a characteristic of a wireless signal handled by each of the plurality of wireless terminals;
an access unit (910), disposed at the specific location, for communicating with said plurality of wireless terminals (900, 901, 902);
and a server unit (920) in communication with said access unit (910), the server unit connected to said access unit (910) and to the Internet (940), for communicating therebetween,
**characterized in that**
the server unit (920) is adapted to allow a particular wireless terminal (900, 901, 902) access to said chat room based at least in part on the determination of the wireless signal characteristic indicating that the physical location of the particular wireless terminal is within the specific location.

2. The system of claim 1, wherein said user of one of said plurality of wireless terminals communicates with the Internet via said server unit (920) and said access unit (910).

3. The system of claim 1, wherein said server unit (920) authenticates an identification of said user of one of said plurality of wireless terminals (900, 901, 902) prior to allowing said user to communicate with at least one other of said plurality of wireless terminals.

4. The system of claim 1, wherein said server unit (920) authenticates an identification and a password of said user of one of said plurality of wireless terminals (900, 901, 902) prior to allowing said user to communicate with at least one other of said plurality of wireless terminals.

5. The system of claim 1, wherein said server unit (920) authenticates an identification of said user of one of said plurality of wireless terminals (900, 901, 902) prior to allowing said user to communicate with the Internet (940) via said server unit (920) and said access unit (910).

6. The system of claim 1, wherein said server unit (920) authenticates an identification and a password of said user of one of said plurality of wireless terminals (900, 901, 902) prior to allowing said user to communicate with the Internet (940) via said server unit (920) and said access unit (910).

7. The system of claim 3 or 4, wherein said server unit (920) further determines that said user is at said specific location prior to allowing said user to communicate with at least one other of said plurality of wireless terminals (900, 901, 902).

8. The system of claim 5 or 6, wherein said server unit (920) further determines that said user is at said specific location prior to allowing said user to communicate with the Internet (940) via said server unit (920) and said access unit (910).

9. The system of any previous claim, wherein said server unit (920) further provides additional services to said user upon a determination that said user is a member of a predefined user group.

10. The system of any one of claims 1 to 9, further comprising: an interactive provider server (122, 920) connected to receive and transmit signals related to interactive content to/from said plurality of mobile terminals (900, 901, 902), wherein said mobile terminals are adapted to communicate with said interactive server provider (122, 920); an interface page for providing information pertinent to said interactive content to one of said plurality of mobile terminals; wherein said page can be configured by said mobile terminal to display said pertinent information according to preferences of said mobile terminal and the interactive content is tailored to the transmission and reception capabilities of said mobile terminal.

11. The system of claim 10, wherein said interactive provider server (122, 920) is a betting service.

12. The system of any previous claim, wherein authorization for accessing a chat room by a mobile terminal (900, 901, 902) is given based on predetermined criteria.

13. The system of claim 12, wherein said predetermined criteria for accessing a chat room include a betting success parameter of a user of one of the plurality of mobile terminals (900, 901, 902, 153).

14. The system of any previous claim , wherein every chat message sent by a user will be stored in a database (430) together with keywords related to said chat user.

15. The system of claim 14, wherein allocation of a mobile terminal user to a chat room is determined on the basis of said keywords in said database (430).

16. The system of claim 10, wherein said preferences are stored by said interactive provider server (122, 920).

17. A method of operating a chat system at a specific location comprising:
communicating with a plurality of wireless terminals with an access unit disposed at the specific location, wherein a physical location of each of the plurality of wireless terminals is determined (1220) at least in part by a characteristic of a wireless signal handled by each of the plurality of wireless terminals;
connecting the access unit to the Internet via a server unit for facilitating communication between the access unit and the Internet;
**characterized by** the step of
enabling (1250) the chat room to be accessible by a particular wireless terminal based at least in part on the determination (1230) of the wireless signal characteristic indicating that the physical location of the particular wireless terminal is within the specific location associated with the chat room.

18. The method of claim 17, further comprising the user of one of the plurality of wireless terminals communicating with the Internet via the server unit and the access unit.

19. The method of claim 17 or 18, further comprising the server unit authenticating (1040, 1050) an identification of the user of one of the plurality of wireless terminals prior to allowing the user to communicate with at least one other of the plurality of wireless terminals.

20. The method of any one of claims 17 to 19, further comprising the server unit authenticating (1040, 1050) an identification and a password of the user of one of the plurality of wireless terminals prior to allowing the user to communicate with at least one other of the plurality of wireless terminals.

21. The method of any one of claims 17 to 20, further comprising the server unit authenticating (1040, 1050) an identification of the user of one of the plurality of wireless terminals prior to allowing the user to communicate with the Internet via the server unit and the access unit.

22. The method of any one of claims 17 to 21, further comprising the server unit authenticating (1040, 1050) an identification and a password of the user of one of the plurality of wireless terminals prior to allowing the user to communicate with the Internet via the server unit and the access unit.

23. The method of claim 19 or 20, further comprising the server unit determining (1230) that the user is at the specific location prior to allowing the user to communicate with at least one other of the plurality of wireless terminals.

24. The method of claim 21 or 22, further comprising the server unit determining (1230) that the user is at the specific location prior to allowing the user to communicate with the Internet via the server unit and the access unit.

25. The method of any one of claims 17 to 24, further comprising the server unit providing additional services (1060) to the user upon a determination that the user is a member of a predefined user group.

## Patentansprüche

1. Chatsystem zum drahtlosen Kommunizieren in einem Chatroom an einem speziellen Ort, umfassend:
- mehrere drahtlose Endgeräte (900, 901, 902), wobei jedes der mehreren drahtlosen Endgeräte (900, 901, 902) konfiguriert ist, um über ein drahtloses Netzwerk zu kommunizieren, wobei ein physikalischer Ort von jedem der mehreren drahtlosen Endgeräte zumindest teilweise durch ein Merkmal eines drahtlosen Signals bestimmbar ist, das von jedem der mehreren drahtlosen Endgeräte gehandhabt wird;
- eine Zugriffseinheit (910), die an dem speziellen Ort angeordnet ist, zum Kommunizieren mit den mehreren drahtlosen Endgeräten (900, 901, 902); und eine Servereinheit (920) in Kommunikation mit der Zugriffseinheit (910), wobei die Servereinheit mit der Zugriffseinheit (910) und dem Internet (940) verbunden ist, um zwischen ihnen zu kommunizieren,
**dadurch gekennzeichnet, dass**
- die Servereinheit (920) angepasst ist, einem bestimmten drahtlosen Endgerät (900, 901, 902) Zugriff zu dem Chatroom zu ermöglichen, zumindest teilweise auf Grundlage der Bestimmung des drahtlosen Signalmerkmals, das anzeigt, dass der physikalische Ort des bestimmten drahtlosen Endgeräts sich innerhalb des speziellen Orts befindet.

2. System von Anspruch 1, wobei der Benutzer eines der mehreren drahtlosen Endgeräte über die Servereinheit (920) und die Zugriffseinheit (910) mit dem Internet kommuniziert.

3. System von Anspruch 1, wobei die Servereinheit (920) eine Identifikation des Benutzers von einem der mehreren drahtlosen Endgeräte (900, 901, 902) authentifiziert, bevor sie es dem Benutzer ermöglicht, mit mindestens einem weiteren der mehreren drahtlosen Endgeräte zu kommunizieren.

4. System von Anspruch 1, wobei die Servereinheit (920) eine Identifikation und ein Passwort des Benutzers von einem der mehreren drahtlosen Endgeräte (900, 901, 902) authentifiziert, bevor sie es dem Benutzer ermöglicht, mit mindestens einem weiteren der mehreren drahtlosen Endgeräte zu kommunizieren.

5. System von Anspruch 1, wobei die Servereinheit (920) eine Identifikation des Benutzers von einem der mehreren drahtlosen Endgeräte (900, 901, 902) authentifiziert, bevor sie es dem Benutzer ermöglicht, mit dem Internet (940) über die Servereinheit (920) und die Zugriffseinheit (910) zu kommunizieren.

6. System von Anspruch 1, wobei die Servereinheit (920) eine Identifikation und ein Passwort des Benutzers von einem der mehreren drahtlosen Endgeräte (900, 901, 902) authentifiziert, bevor sie es dem Benutzer ermöglicht, mit dem Internet (940) über die Servereinheit (920) und die Zugriffseinheit (910) zu kommunizieren.

7. System von Anspruch 3 oder 4, wobei die Servereinheit (920) weiter bestimmt, dass der Benutzer sich an dem speziellen Ort befindet, bevor sie es dem Benutzer ermöglicht, mit mindestens einem weiteren der mehreren drahtlosen Endgeräte (900, 901, 902) zu kommunizieren.

8. System von Anspruch 5 oder 6, wobei die Servereinheit (920) weiter bestimmt, dass der Benutzer sich an dem speziellen Ort befindet, bevor sie es dem Benutzer ermöglicht, mit dem Internet (940) über die Servereinheit (920) und die Zugriffseinheit (910) zu kommunizieren.

9. System von einem der vorangegangenen Ansprüche, wobei die Servereinheit (920) dem Benutzer nach einer Bestimmung, dass der Benutzer ein Mitglied einer vordefinierten Benutzergruppe ist, weiter zusätzliche Dienste bereitstellt.

10. System von einem der Ansprüche 1 bis 9, weiter umfassend:
- einen interaktiven Anbieterserver (122, 920), der verbunden ist, um Signale betreffend interaktiven Inhalt an/von den mehreren Mobilendgeräten (900, 901, 902) zu empfangen und zu übermitteln, wobei die Mobilendgeräte angepasst sind, um mit dem interaktiven Anbieterserver (122, 920) zu kommunizieren;
- eine Schnittstellenseite, um einem der mehreren Mobilendgeräte Informationen bereitzustellen, die zu dem interaktiven Inhalt gehören; wobei die Seite durch das Mobilendgerät konfiguriert sein kann, um die zugehörigen Information gemäß den Präferenzen des Mobilendgeräts anzuzeigen und wobei der interaktive Inhalt auf das Übermittlungs- und Empfangsfähigkeiten des Mobilendgeräts zugeschnitten ist.

11. System von Anspruch 10, wobei der interaktiven Anbieterserver (122, 920) ein Wettdienst ist.

12. System von einem der vorhergehenden Anspruch, wobei eine Autorisierung zum Zugreifen auf einen Chatroom durch ein Mobilendgerät (900, 901, 902) auf Grundlage von vorbestimmten Kriterien geben ist.

13. System von Anspruch 12, wobei die vorbestimmten Kriterien zum Zugreifen auf einen Chatroom einen Wetterfolgsparameter eines Benutzers eines der mehreren Mobilendgeräte (900, 901, 902, 153) einschließt.

14. System von einem vorhergehenden Anspruch, wobei jede Chatnachricht, die von einem Benutzer gesendet wird, in einer Datenbank (430) zusammen mit Schlüsselwörtern bezogen auf die Chatbenutzer, gespeichert wird.

15. System von Anspruch 14, wobei eine Zuordnung eines Mobilendgerätbenutzers auf einen Chatroom auf der Grundlage der Schlüsselwörter in der Datenbank (430) bestimmt ist.

16. System von Anspruch 10, wobei die Präferenzen durch den interaktiven Anbieterserver (122, 920) gespeichert werden.

17. Verfahren zum Betreiben eines Chatsystems an einem speziellen Ort, umfassend:
- Kommunizieren von mehreren drahtlosen Endgeräten mit einer Zugriffseinheit, die an dem speziellen Ort angeordnet ist, wobei ein physikalischer Ort von jedem der mehreren drahtlosen Endgeräte zumindest teilweise durch ein Merkmal eines drahtlosen Signals bestimmt wird (1220), das von jedem der mehreren drahtlosen Endgeräte gehandhabt wird;
- Verbinden der Zugriffseinheit mit dem Internet über eine Servereinheit, um die Kommunikation zwischen der Zugriffseinheit und dem Internet zu erleichtern;
**gekennzeichnet durch** den Schritt
- Ermöglichen (1250), dass von einem bestimmten drahtlosen Endgerät auf den Chatroom zugegriffen werden kann, zumindest teilweise auf Grundlage der Bestimmung (1230) der drahtlosen Signaleigenschaft, die anzeigt, dass der physikalische Ort eines bestimmten drahtlosen Endgeräts sich innerhalb des speziellen Orts, der mit dem Chatroom zugeordnet ist, befindet.

18. Verfahren nach Anspruch 17, weiter umfassend den Benutzer eines der mehreren drahtlosen Endgeräte, die mit dem Internet über die Servereinheit und die Zugriffseinheit kommunizieren.

19. Verfahren von Anspruch 17 oder 18, weiter umfassend, dass die Servereinheit eine Identifikation des Benutzers von einem der mehreren drahtlosen Endgeräte authentifiziert (1040, 1050), bevor sie es dem Benutzer ermöglicht, mit mindestens einem weiteren der mehreren drahtlosen Endgeräte zu kommunizieren.

20. Verfahren von einem der Ansprüche 17 bis 19, weiter umfassend, dass die Servereinheit eine Identifikation und ein Passwort des Benutzers von einem der mehreren drahtlosen Endgeräte authentifiziert (1040, 1050), bevor sie es dem Benutzer ermöglicht, mit mindestens einem weiteren der mehreren drahtlosen Endgeräte zu kommunizieren.

21. Verfahren von einem der Ansprüche 17 bis 20, weiter umfassend, dass die Servereinheit eine Identifikation des Benutzers von einem der mehreren drahtlosen Endgeräte authentifiziert (1040, 1050), bevor sie es dem Benutzer ermöglicht, mit dem Internet über die Servereinheit und die Zugriffseinheit zu kommunizieren.

22. Verfahren von einem der Ansprüche 17 bis 21, weiter umfassend, dass die Servereinheit eine Identifikation und ein Passwort des Benutzers von einem der mehreren drahtlosen Endgeräte authentifiziert (1040, 1050), bevor sie es dem Benutzer ermöglicht, mit dem Internet über die Servereinheit und die Zugriffseinheit zu kommunizieren.

23. Verfahren von Anspruch 19 oder 20, weiter umfassend, dass die Servereinheit bestimmt (1230), dass der Benutzer sich an einem speziellen Ort befindet, bevor sie es dem Benutzer ermöglicht, mit mindestens einem weiteren der mehreren drahtlosen Endgeräte zu kommunizieren.

24. Verfahren von Anspruch 21 oder 22, weiter umfassend, dass die Servereinheit bestimmt (1230), dass der Benutzer sich an einem speziellen Ort befindet, bevor sie es dem Benutzer ermöglicht, mit dem Internet über die Servereinheit und die Zugriffseinheit zu kommunizieren.

25. Verfahren von einem der vorangegangenen Ansprüche 17 bis 24, weiter umfassend, dass die Servereinheit nach einer Bestimmung, dass der Benutzer ein Mitglied einer vordefinierten Benutzergruppe ist, dem Benutzer zusätzliche Dienste (1060) bereitstellt.

## Revendications

1. Système de discussion pour communiquer sans fil dans une salle de discussion à une localisation spécifique comprenant :
une pluralité de terminaux sans fil (900, 901, 902), dans lesquels chacun de la pluralité de terminaux sans fil (900, 901, 902) est configuré pour communiquer via un réseau sans fil, dans lequel une localisation physique de chacun de la pluralité de terminaux sans fil est déterminable au moins en partie par une caractéristique d'un signal sans fil géré par chacun de la pluralité de terminaux sans fil ;
une unité d'accès (910), située à la localisation spécifique, pour communiquer avec ladite pluralité de terminaux sans fil (900, 901, 902) ;
et une unité de serveur (920) en communication avec ladite unité d'accès (910), l'unité de serveur connectée à ladite unité d'accès (910) et à l'Internet (940), pour permettre la communication entre les deux,
**caractérisé en ce que**
l'unité de serveur (920) est adaptée pour permettre à un terminal sans fil particulier (900, 901, 902) d'accéder à ladite salle de discussion sur la base au moins en partie de la détermination de la caractéristique de signal sans fil indiquant que la localisation physique du terminal sans fil particulier se situe à la localisation spécifique.

2. Système selon la revendication 1, dans lequel ledit utilisateur de l'un de ladite pluralité de terminaux sans fil communique avec l'Internet via ladite unité de serveur (920) et ladite unité d'accès (910).

3. Système selon la revendication 1, dans lequel ladite unité de serveur (920) authentifie une identification dudit utilisateur de l'un de ladite pluralité de terminaux sans fil (900, 901, 902) avant d'autoriser ledit utilisateur à communiquer avec au moins un autre de ladite pluralité de terminaux sans fil.

4. Système selon la revendication 1, dans lequel ladite unité de serveur (920) authentifie une identification et un mot de passe dudit utilisateur de l'un de ladite pluralité de terminaux sans fil (900, 901, 902) avant d'autoriser ledit utilisateur à communiquer avec au moins un autre de ladite pluralité de terminaux sans fil.

5. Système selon la revendication 1, dans lequel ladite unité de serveur (920) authentifie une identification dudit utilisateur de l'un de ladite pluralité de terminaux sans fil (900, 901, 902) avant d'autoriser ledit utilisateur à communiquer avec l'Internet (940) via ladite unité de serveur (920) et ladite unité d'accès (910).

6. Système selon la revendication 1, dans lequel ladite unité de serveur (920) authentifie une identification et un mot de passe dudit utilisateur de l'un de ladite pluralité de terminaux sans fil (900, 901, 902) avant d'autoriser ledit utilisateur à communiquer avec l'Internet (940) via ladite unité de serveur (920) et ladite unité d'accès (910).

7. Système selon la revendication 3 ou 4, dans lequel ladite unité de serveur (920) détermine en outre que ledit utilisateur se trouve à ladite localisation spécifique avant d'autoriser ledit utilisateur à communiquer avec au moins un autre de ladite pluralité de terminaux sans fil (900, 901, 902).

8. Système selon la revendication 5 ou 6, dans lequel ladite unité de serveur (920) détermine en outre que ledit utilisateur se trouve à ladite localisation spécifique avant d'autoriser ledit utilisateur à communiquer avec l'Internet (940) via ladite unité de serveur (920) et ladite unité d'accès (910).

9. Système selon l'une quelconque revendication précédente, dans lequel ladite unité de serveur (920) fournit en outre des services supplémentaires audit utilisateur lors d'une détermination que ledit utilisateur est un membre d'un groupe d'utilisateurs prédéfini.

10. Système selon l'une quelconque des revendications 1 à 9, comprenant en outre : un serveur de fournisseur d'accès interactif (122, 920) connecté pour recevoir et transmettre des signaux concernant un contenu interactif à/depuis ladite pluralité de terminaux mobiles (900, 901, 902), dans lequel lesdits terminaux mobiles sont adaptés pour communiquer avec ledit serveur de fournisseur d'accès interactif (122, 920) ; une page d'interface destinée à fournir des informations pertinentes audit contenu interactif à l'un de ladite pluralité de terminaux mobiles ; dans lequel ladite page peut être configurée par ledit terminal mobile pour afficher lesdites informations pertinentes en fonction de préférences dudit terminal mobile et le contenu interactif est adapté aux capacités de transmission et réception dudit terminal mobile.

11. Système selon la revendication 10, dans lequel ledit serveur de fournisseur d'accès interactif (122, 920) est un service de pari.

12. Système selon l'une quelconque revendication précédente, dans lequel l'autorisation d'accès à une salle de conversation par un terminal mobile (900, 901, 902) est donnée sur la base de critères prédéterminés.

13. Système selon la revendication 12, dans lequel lesdits critères prédéterminés pour accéder à une salle de conversation incluent un paramètre de réussite de pari d'un utilisateur de l'un de la pluralité de terminaux mobiles (900, 901, 902, 153).

14. Système selon l'une quelconque revendication précédente, dans lequel chaque message de conversation envoyé par un utilisateur sera stocké dans une base de donnée (430) conjointement aux mots de passe relatifs audit utilisateur de conversation.

15. Système selon la revendication 14, dans lequel l'allocation d'un utilisateur de terminal mobile à une salle de conversation est déterminée sur la base desdits mots de passe dans ladite base de donnée (430).

16. Système selon la revendication 10, dans lequel lesdites préférences sont stockées par ledit serveur de fournisseur d'accès interactif (122, 920).

17. Procédé de fonctionnement d'un système de conversation à une localisation spécifique comprenant :
la communication avec une pluralité de terminaux sans fil avec une unité d'accès agencée à la localisation spécifique, dans lequel une localisation physique de chacun de la pluralité de terminaux sans fil est déterminée (1220) au moins en partie par une caractéristique d'un signal sans fil géré par chacun de la pluralité de terminaux sans fil ;
la connexion de l'unité d'accès à l'Internet via une unité de serveur pour faciliter la communication entre l'unité d'accès et l'Internet ;
**caractérisé par** l'étape consistant à
permettre (1250) à la salle de discussion d'être accessible par un terminal sans fil particulier sur la base au moins en partie de la détermination (1230) de la caractéristique de signal sans fil indiquant que la localisation physique du terminal sans fil particulier se situe à la localisation spécifique associée à la salle de discussion.

18. Procédé selon la revendication 17, comprenant en outre l'utilisateur de l'un de la pluralité de terminaux sans fil communiquant avec l'Internet via l'unité de serveur et l'unité d'accès.

19. Procédé selon la revendication 17 ou 18, comprenant en outre l'authentification par l'unité de serveur (1040, 1050) d'une identification de l'utilisateur de l'un de la pluralité de terminaux sans fil avant l'autorisation de l'utilisateur à communiquer avec au moins un autre de la pluralité de terminaux sans fil.

20. Procédé selon l'une quelconque des revendications 17 à 19, comprenant en outre l'authentification par l'unité de serveur (1040, 1050) d'une identification et d'un mot de passe de l'utilisateur de l'un de la pluralité de terminaux sans fil avant l'autorisation de l'utilisateur à communiquer avec au moins un autre de la pluralité de terminaux sans fil.

21. Procédé selon l'une quelconque des revendications 17 à 19, comprenant en outre l'authentification par l'unité de serveur (1040, 1050) d'une identification de l'utilisateur de l'un de la pluralité de terminaux sans fil avant l'autorisation de l'utilisateur à communiquer avec l'Internet via l'unité de serveur et l'unité d'accès.

22. Procédé selon l'une quelconque des revendications 17 à 21, comprenant en outre l'authentification par l'unité de serveur (1040, 1050) d'une identification et d'un mot de passe de l'utilisateur de l'un de la pluralité de terminaux sans fil avant l'autorisation de l'utilisateur à communiquer avec l'Internet via l'unité de serveur et l'unité d'accès.

23. Procédé selon la revendication 19 ou 20, comprenant en outre la détermination par l'unité de serveur (1230) que l'utilisateur se trouve à la localisation spécifique avant l'autorisation de l'utilisateur à communiquer avec au moins un autre de la pluralité de terminaux sans fil.

24. Procédé selon la revendication 21 ou 22, comprenant en outre la détermination par l'unité de serveur (1230) que l'utilisateur se trouve à la localisation spécifique avant l'autorisation de l'utilisateur à communiquer avec l'Internet via l'unité de serveur et l'unité d'accès.

25. Procédé selon l'une quelconque des revendications 17 à 24, comprenant en outre la fourniture par l'unité de serveur de services supplémentaires (1060) à l'utilisateur lors d'une détermination que l'utilisateur est un membre d'un groupe d'utilisateurs prédéfini.
